# FASCICULE DE BREVET EUROPEEN

(11) **EP 3 151 950 B1**
(45) Date de publication et mention de la délivrance du brevet: **01.03.2023**
(21) Numéro de dépôt: 15732838.6
(22) Date de dépôt: 02.06.2015
(51) Int. Cl.: B01D 63/06, B01D 46/24, B01D 69/12, C04B 38/00, F01N 3/28, F01N 3/022

(54) **PROCEDE DE REALISATION D'UN FILTRE A MEMBRANE**
VERFAHREN ZUR HERSTELLUNG EINES MEMBRANFILTERS
PROCESS FOR PRODUCING A MEMBRANE FILTER

(30) Priorité: 06.06.2014 FR 1455179
(43) Date de publication de la demande: 12.04.2017
(73) Titulaire: PSA Automobiles SA, 78300 Poissy (FR); Centre National de la Recherche Scientifique (C.N.R.S.), 75016 Paris (FR); Ceramiques Techniques Industrielles CTI, 30340 Salindres (FR); Université Claude Bernard Lyon 1, 69622 Villeurbanne Cedex (FR)
(72) Inventeur: PAJOT, Karine, 91370 Verrieres le Buisson (FR); BLANCHARD, Gilbert, 92100 Boulogne Billancourt (FR); CARTOIXA, Bruno, 30340 Salindres (FR); NOUVEL, Valérie, 30580 Navacelles (FR); VERNOUX, Philippe, 69270 Rochetaillee sur Saone (FR)
(74) Mandataire: Bourguignon, Eric Pascal Jean
(86) Numéro de dépôt international: PCT/FR2015/051458
(87) Numéro de publication internationale: WO 2015/185853

(56) Documents cités:
- EP-A1- 2 275 185
- WO-A1-2011/038059
- US-A1- 2004 191 133
- US-A1- 2012 047 860
- US-A1- 2012 315 492
- US-A1- 2013 118 355
- C. AGRAFIOTIS ET AL: "The effect of particle size on the adhesion properties of oxide washcoats on cordierite honeycombs", JOURNAL OF MATERIALS SCIENCE LETTERS, vol. 18, no. 17, 1 janvier 1999 (1999-01-01), pages 1421-1424, XP055172065, ISSN: 0261-8028, DOI: 10.1023/A:1006675524692
- AGRAFIOTIS C ET AL: "The effect of powder characteristics on washcoat quality. Part I: Alumina washcoats", JOURNAL OF THE EUROPEAN CERAMIC SOCIETY, ELSEVIER SCIENCE PUBLISHERS, BARKING, ESSEX, GB, vol. 20, no. 7, 1 juin 2000 (2000-06-01), pages 815-824, XP004194030, ISSN: 0955-2219, DOI: 10.1016/S0955-2219(99)00218-6

## Description

La présente invention se rapporte au domaine de la catalyse de dépollution pour la réduction des oxydes d'azote (NO, NO₂ et N₂O) et/ou l'oxydation du monoxyde de carbone et des hydrocarbures imbrûlés et/ou la combustion des suies des moteurs à combustion internes et allumage spontané (moteur Diesel) ou commandé (moteur Essence).

Plus précisément, la présente invention concerne des dispositifs de traitement des gaz d'échappement de moteurs thermiques, équipés d'un dispositif de dépollution des gaz d'échappement permettant de traiter soit les hydrocarbures imbrulés, soit le monoxyde de carbone, soit les particules de suies, soit les oxydes d'azote ou plusieurs de ces polluants comme par exemple les oxydes d'azote et les particules de suies.

Les moteurs thermiques tels que ceux utilisés par les véhicules particuliers, ou les véhicules de type poids lourds, ou les véhicules de chantiers, ou les bateaux, émettent un certain nombre d'espèces chimiques polluantes et une certaine quantité qu'il convient de limiter pour minimiser leur impact sur l'environnement atmosphérique. Depuis longtemps, les constructeurs de véhicules automobiles à moteur thermique cherchent à réduire les émissions dans l'atmosphère de polluants produits par les moteurs thermiques lors de la combustion du carburant, en limitant plus particulièrement les émissions des composés suivants :
- les oxydes d'azote, principalement le monoxyde d'azote NO, le dioxyde d'azote NO₂, et le protoxyde d'azote N₂O, désignés ensemble sous l'abréviation NOx.
- le monoxyde de carbone et les hydrocarbures imbrulés,
- les suies, principalement issues des moteurs diesel ou des moteurs Injection Directe Essence (IDE).

C'est pourquoi ces dernières années ont vu se multiplier les dispositifs de traitement des gaz d'échappement. Ces dispositifs font appel le plus souvent à un filtre à particules (également désigné par son acronyme FAP par la suite par soucis de concision) pour la filtration et la combustion des suies et éventuellement une fonction de réduction des oxydes d'azote. On connait à cet égard les dispositifs comprenant une fonction dite « NOx trap » selon la terminologie anglaise et « piège à NOx » selon la terminologie française dans un FAP, et des dispositifs comprenant une fonction de réduction sélective des oxydes d'azote (ou SCR pour l'acronyme de l'expression anglaise Sélective Catalytic Réduction) dans un FAP.

Typiquement, le filtre est constitué par une paroi filtrante, en céramique, par exemple en cordiérite, ou en carbure de silicium, ou en titanate d'aluminium ; à travers de laquelle circulent les gaz d'échappement. Pour ajouter à cette fonction de filtration des fonctions de combustion catalytique des suies ou des fonctions de réduction des oxydes d'azote, les fabricants de ces dispositifs déposent sur les parois de ces filtres des membranes servant à supporter soit une phase catalytique de combustion des suies soit une phase de traitement des oxydes d'azote. Ainsi la demande de brevet WO-2011038059 enseigne une membrane à base de d'Alumine ou de Cordiérite. La demande de brevet EP-2275185 enseigne pour sa part une membrane à base de SiC. Afin d'assurer une bonne adhérence de cette membrane sur les parois de filtres les dispositifs sont calcinés à haute température typiquement vers 1500°C lorsque la membrane est en SiC, ou vers 1300°C lorsque la membrane est soit en cordiérite soit en silice. Selon l'art antérieur, la membrane est déposée après avoir introduit la phase catalytique ou avant la phase catalytique.

On connait encore le document US2013/118355A1 correspondant au préambule de la revendication 1.

Bien que ces dispositifs à membrane présentent un intérêt évident lié à leur compacité ils présentent également des inconvénients. Ces inconvénients sont liés, pour les membranes calcinées à haute température, à la dégradation de l'efficacité de la phase catalytique lors des phases de calcination ou à la perte d'efficacité de cette membrane vis-à-vis de l'application, spécifiquement pour les membranes calcinées à basse température (300°C).

De manière à pallier à ces inconvénients, la présente invention a pour but de proposer des dispositifs pour lesquels les membranes en cordiérite ou en SiC ou en titanate d'aluminium ou en silice sont synthétisées dans des conditions ne nécessitant pas une calcination à très haute température tout en conservant leur stabilité lors de leur application à haute température.

L'invention a ainsi pour premier objet un procédé de réalisation d'un filtre à particules à membrane comportant les étapes de sélection d'un monolithe en nid d'abeille avec un réseau de canaux séparés par des parois de canaux poreuses et le dépôt sur ces parois d'une membrane adhérant à la paroi, obtenue par une opération dite de « wash coat » selon la terminologie anglaise ou encore dite d'enduction selon la terminologie française (les deux termes étant par la suite utilisés indifféremment dans le présent texte) pendant laquelle une partie des parois du monolithe sont placées au contact d'une suspension aqueuse d'une poudre frittable d'un matériau constitutif du monolithe puis en séchant (par exemple pendant plusieurs heures à température ambiante puis dans un four) et enfin en calcinant le monolithe revêtu à une température inférieure à 800°C, tel que la suspension aqueuse comporte également de la poudre de verre et un plastifiant, la membrane étant obtenue en répétant l'opération d'enduction, la concentration massique de poudre frittable et de poudre de verre dans la suspension aqueuse étant réduite à chaque nouvelle opération, la concentration massique en poudre frittable étant comprise entre 20 et 30%, la concentration massique de poudre de verre entre 3 et 5%, la concentration en plastifiant de l'ordre de 1 % en masse, l'eau complétant à 100%, pour la première opération d'enduction.

Selon l'invention, la calcination est opérée à une température de préférence au plus égale à 500°C.

Selon l'invention, la membrane est perméable, et permet donc une filtration dite en « wall through » en anglais (pour « à travers les parois » en français), c'est-à-dire que le filtrage des gaz d'échappement du moteur thermique qui vont traverser le filtre de l'invention vont traverser les parois du filtre, et, de fait, ma membrane également.

Ajouter de la poudre de verre s'est avéré très bénéfique.

Il est préférable que la température de consolidation de la membrane soit inférieure à la température où le catalyseur se désactiverait.

De préférence, le filtre comprend des canaux d'entrée et des canaux de sortie (explicités plus loin dans le présent texte), et les parois du monolithe qui sont placées au contact de la suspension aqueuse d'une poudre frittable d'un matériau constitutif du monolithe sont les parois des canaux d'entrée.

De préférence, ce sont donc les parois des canaux d'entrée du filtre qui sont munies de la membrane selon l'invention.

Le monolithe et la poudre frittable comprennent, et sont de préférence constitués par un matériau choisi parmi le Carbure de Silicium, le Si-SiC, le Nitrure de Silicium, le Titanate d'Aluminium, la Mullite ou la Cordiérite, ou un mélange d'au moins deux de ces matériaux. Selon l'application, on peut choisir un diamètre de pore médian de 10 à 13 µm et un volume poreux de 40 - 45%, ou un diamètre de pore médian de 20 à 25 µm et un volume poreux de 58 - 65 %.

Dans une variante, la poudre frittable a une distribution granulométrique telle que 50 % des grains présente un diamètre au moins supérieur au diamètre de pore médian de la couche réceptrice.

Avantageusement, le monolithe et la poudre frittable sont soit tous les deux en cordiérite soit tous les deux en carbure de silicium.

La proportion de poudre de verre peut être très variable, et, par exemple, être comprise entre 1 et 50% en poids. Pour conserver sa porosité à la membrane obtenue selon l'invention, il est préférable de limiter cette proportion à au plus 25% (par exemple entre 3 et 25%) dans le cas des phases cristallines et à au plus 10% (notamment 2 à 10%) dans le cas de phases vitreuses.

Pour la première opération d'enduction, la concentration massique en poudre frittable est de préférence comprise entre 20 et 30%, la concentration en poudre de verre entre 3 et 5%, la concentration en plastifiant de l'ordre de 1% en masse, l'eau complétant à 100%. Pour l'opération suivante, on peut opérer avec des concentrations en poudre frittable et en poudre de verre comprises entre 35 et 65% de la concentration à l'étape précédente, soit typiquement environ deux fois moins concentrée en matériaux en poudre, la concentration en plastifiant restant typiquement inchangée.

Dans la mesure où seule une partie des canaux est de préférence revêtue de la membrane, une opération de bouchage temporaire des deux extrémités des canaux ne devant pas être revêtus est réalisée avant d'opérer le traitement. Les bouchons temporaires sont détruits par l'opération de calcination et des bouchons permanents sont mis en place après cette opération de calcination, de manière à boucher alternativement les extrémités d'entrée ou de sortie des canaux du monolithe et à créer ainsi des canaux d'entrée et de sortie des fluides traités par le filtre, obligeant ainsi ces fluides à travers les parois des canaux.

Les canaux d'entrée du filtre sont ainsi les canaux dont l'extrémité aval est bouchée, tandis que les canaux de sortie sont les canaux dont l'extrémité amont est bouchée. Les gaz d'échappement entrent donc dans le filtre par les canaux d'entrée et en ressortent par les canaux de sortie. On comprend les termes « amont » et « aval » en fonction de l'axe général d'écoulement des gaz d'échappement dans le filtre à particules une fois celui-ci monté dans la ligne d'échappement d'un moteur thermique.

L'invention a également pour objet le procédé précédemment décrit, où l'on procède de plus au dépôt d'un ou plusieurs catalyseur(s) sur les canaux du filtre, notamment au moins au niveau des parois des canaux d'entrée, notamment par enduction ou imprégnation, sur le monolithe, avant ou après avoir réalisé la membrane. On peut également envisager de revêtir/imprégner les canaux de sortie de un ou plusieurs matériaux catalytiques.

Le catalyseur ou toute combinaison de catalyseurs est de préférence à sélectionner parmi les catalyseurs suivants : catalyseur de réduction des NOx, catalyseur d'oxydation, piège à NOx, catalyseur trois voies ou quatre voies, catalyseur dit « NH₃ slip », expression anglaise traduite en français par catalyseur de traitement des rejets d'ammoniac et qui présente la propriété de traiter, notamment par oxydation, l'ammoniac en excès de façon à éviter la sortie d'ammoniac à l'extérieur en bout de ligne d'échappement.

Selon un mode de réalisation, le catalyseur est un catalyseur de réduction des NOx et on effectue le dépôt dudit catalyseur en imprégnant les parois du monolithe d'une suspension aqueuse, notamment à base d'une poudre de zéolithe, par exemple de type ferriérite échangée avec du fer ou du cuivre, avant de procéder aux opérations d'enduction de la membrane.

Selon un autre mode de réalisation, le catalyseur est un catalyseur d'oxydation et on effectue le dépôt dudit catalyseur, notamment à base de pseudoboehmite, de nitrate de platine à 25% et d'acide nitrique, après avoir procédé aux opérations d'enduction de la membrane.

L'invention a également pour objet le filtre, notamment le filtre à particules obtenu selon le procédé précédemment décrit, et qui peut donc être muni d'au moins un revêtement catalytique sous ou sur la membrane.

Les filtres obtenus par le procédé selon l'invention peuvent être plus particulièrement utilisés dans des systèmes d'échappement, tant de moteurs à essence à injection directe que de moteurs diesels, présentant une efficacité de filtration des particules accrue. Ils sont donc aussi pertinents pour des moteurs thermiques essence, les futures normes imposant un filtre à particules non seulement pour les moteurs diesel mais aussi pour les moteurs essence.

D'autres détails et avantages de l'invention ressortent plus particulièrement de la description faite ci-après d'exemples comparatifs de l'art antérieur et de l'invention

### Exemple 1 : synthèse selon l'art antérieur d'un FAP (A) catalysé pour oxydation des suies

Des filtres à particules à structure en nid d'abeille en Cordiérite bouchée à leurs extrémités de façon à ce que les canaux d'alimentation soient bouchés à une première extrémité et les canaux d'évacuation soient bouchés à l'autre extrémité, de diamètre 25 mm, de longueur 51 mm, d'une densité de cellules de 200 cpsi d'une épaisseur de paroi de 0,30 mm sont sélectionnés. Les parois des monolithes présentent un diamètre de pore médian de 12 µm et un volume poreux de 41%.

Les canaux d'alimentation sont exposés à un flux de gaz chargé en particule de cordiérite d'une taille médiane de 0,15 µm formant ainsi, par accumulation, la membrane à leur surface. On procède ensuite à une calcination de la membrane à une température de 300°C pendant 1 heure.

Dans une dernière étape on procède au dépôt du catalyseur d'oxydation des suies sur la membrane en Cordiérite à partir d'une suspension comportant ;
- 10% en masse pseudoboehmite
- 0,02% en masse de nitrate de Pt à 25% en poids de métal
- 0,1% en masse d'acide nitrique
- 89,88% en masse d'eau déminéralisée.

La suspension est broyée en broyeur à billes pendant 3 heures, puis appliquée à la surface des canaux d'alimentation sur la membrane. Le catalyseur est ensuite calciné à 450°C pendant 15 min.

### Exemple 2 : synthèse selon l'art antérieur d'un catalyseur de réduction des oxydes d'azote sur FAP (B) revêtu d'une membrane

Des monolithes à structure en nid d'abeille en SiC, de diamètre 25mm, de longueur 51mm, d'une densité de cellules de 300 cpsi d'une épaisseur de paroi de 0,30 mm sont sélectionnés. Les parois des monolithes présentent un diamètre de pore médian de 23 µm et un volume poreux de 58%.

On réalise le bouchage temporaire tel que les canaux d'alimentation du filtre soient bouchés à une extrémité du filtre et que les canaux d'évacuation soient bouchés à l'autre extrémité du filtre, sur une hauteur d'environ 2 à 3 mm. Le matériau de bouchage est une colle organique.

Ensuite on imprègne la porosité du filtre, par l'une de ces extrémités, d'une suspension comprenant 15 % en masse d'une poudre de zéolithe de type Ferriérite échangée avec 1,05% poids de Fer et 85 % en masse d'eau déminéralisée, ayant été préalablement broyée en broyeur à billes pendant 3 heures.

On revide l'excédent de suspension, par l'autre extrémité, par l'action conjuguée de la gravité et du vide, puis on sèche à 70°C pendant 12h.

L'imprégnation suivie du séchage sont répétés jusqu'à obtention d'un chargement en zéolithe de 100 g/l, et le monolithe imprégné est calciné à 600°C pendant 1 heure. Lors de cette calcination, la colle organique utilisée pour le bouchage temporaire est oxydé ce qui a pour effet d'éliminer les bouchons temporaires.

On réalise ensuite le bouchage temporaire d'une partie des canaux pour chaque extrémité du monolithe de façon à ce que les canaux d'évacuation du filtre (i.e. les canaux se situant en aval des parois de filtration, par opposition aux canaux d'alimentation) soient bouchés aux deux extrémités sur une hauteur d'environ 2 à 3 mm. Le matériau de bouchage est une colle organique.

Puis un wash-coat (c'est-à-dire une composition adaptée à un dépôt par enduction) comprenant 10 % en masse de particules de SiC ayant une distribution granulométrique centrée sur 0,1 µm, 89 % en masse d'eau déminéralisée, et 1 % en masse de plastifiant cellulosique, est appliqué aux parois des canaux d'alimentation du filtre, séché à température ambiante pendant au moins 12 heures, séché à 100°C pendant 4 heures.

On procède ensuite à une calcination des bouchons temporaires à une température de 600°C pendant 1 heure.

On réalise le bouchage final tel que les canaux d'alimentation du filtre soient bouchés à une extrémité du filtre et que les canaux d'évacuation soient bouchés à l'autre extrémité du filtre, à l'aide d'une pâte comprenant pour sa partie minérale 80% de grains de SiC présentant une granulométrie médiane de 50% inférieure à celle des grains de SiC constituant le monolithe ; 20% de grains de Si3N4 et complétée par un plastifiant cellulosique et de l'eau pour obtenir ladite pâte.

L'ensemble du catalyseur ainsi formé est calciné à 1500°C pendant 2h sous Argon pour assurer une bonne adhésion de la membrane sur la paroi filtrante.

### Exemple 3 : synthèse selon l'invention d'un FAP revêtu d'une membrane et catalysé pour oxydation des suies (C)

Des filtres à particules à structure en nid d'abeille en Cordiérite bouchée à leurs extrémités de façon à ce que les canaux d'alimentation soient bouchés à une première extrémité et les canaux d'évacuation soient bouchés à l'autre extrémité, de diamètre 25 mm, de longueur 51 mm, d'une densité de cellules de 200 cpsi d'une épaisseur de paroi de 0,30 mm sont sélectionnés. Les parois des monolithes présentent un diamètre de pore médian de 12 µm et un volume poreux de 41%.

On réalise ensuite le bouchage temporaire d'une partie des canaux pour chaque extrémité du monolithe de façon à ce que les canaux d'évacuation du filtre (i.e. les canaux se situant en aval des parois de filtration, par opposition aux canaux d'alimentation) soient bouchés aux deux extrémités sur une hauteur d'environ 2 à 3 mm. Le matériau de bouchage est une colle organique.

Un wash-coat comprenant 26% en masse de particules de cordiérite ayant une distribution granulométrique centrée sur 13 µm, 4% en masse d'une poudre de verre (fritte) ayant un point de ramollissement de 375°C, 69 % en masse d'eau déminéralisée, et 1 % en masse de plastifiant cellulosique, est appliqué aux parois des canaux d'alimentation du filtre, séché à température ambiante pendant au moins 15 heures, séché à 100°C pendant 4 heures.

Un deuxième wash-coat comprenant 13 % en masse de particules de cordiérite ayant une distribution granulométrique centrée sur 13 µm, 2% en masse d'une poudre de verre (fritte) ayant un point de ramollissement de 375°C, 84 % en masse d'eau déminéralisée,1% en masse de plastifiant cellulosique, est appliqué aux parois des canaux d'alimentation du filtre dans le sens inverse de la première enduction, séché à température ambiante pendant au moins 15 heures, séché à 100°C pendant 4 heures.

Un troisième wash-coat comprenant 8.5 % en masse de particules de cordiérite ayant une distribution granulométrique centrée sur 7 µm, 1.5% en masse d'une poudre de verre (fritte) ayant un point de ramollissement de 375°C, 89 % en masse d'eau déminéralisée, 1% en masse de plastifiant cellulosique, est appliqué aux parois des canaux d'alimentation du filtre dans le sens inverse de la deuxième enduction, séché à température ambiante pendant au moins 15 heures, séché à 100°C pendant 4 heures, puis calciné à 600°C pendant 1h. Lors de cette calcination, la colle organique utilisée pour le bouchage temporaire est oxydée ce qui a pour effet d'éliminer les bouchons temporaires.

On réalise un deuxième bouchage temporaire d'une partie des canaux pour chaque extrémité du monolithe de façon à ce que les canaux d'évacuation du filtre (i.e. les canaux se situant en aval des parois de filtration, par opposition aux canaux d'alimentation) soient bouchés aux deux extrémités (schéma) sur une hauteur d'environ 2 à 3 mm. Le matériau de bouchage est une colle organique.

Une suspension comprenant 10% en masse pseudoboehmite, 0,02% en masse de nitrate de Pt à 25% en poids de métal, 0,1% en masse d'acide nitrique et 89,88% en masse d'eau déminéralisée, préalablement broyée en broyeur à billes pendant 3 heures, est appliquée à la surface des canaux d'alimentation sur la membrane puis calciner à 540°C. Lors de cette calcination, la colle organique utilisée pour le second bouchage temporaire est oxydée ce qui a pour effet d'éliminer ces bouchons temporaires.

On réalise ensuite le bouchage final des canaux à partir de grains de Cordiérite présentant une granulométrie médiane inférieure de 50% de celle du matériau qui compose le monolithe pour 85% en masse et de poudre de verre (fritte) ayant un point de ramollissement de 375°C pour 15% en masse. Les bouchons ainsi formés sont ensuite frittés à une température de 540°C pendant 1h.

### Exemple 4 : synthèse selon l'invention d'un catalyseur de réduction des oxydes d'azote sur FAP (D) revêtu d'une membrane :

Des monolithes à structure en nid d'abeille en SiC, de diamètre 25mm, de longueur 51mm, d'une densité de cellules de 300 cpsi d'une épaisseur de paroi de 0,30 mm sont sélectionnés. Les parois des monolithes présentent un diamètre de pore médian de 23 µm et un volume poreux de 58%.

On réalise ensuite le bouchage temporaire tel que les canaux d'alimentation du filtre soient bouchés à une extrémité du filtre et que les canaux d'évacuation soient bouchés à l'autre extrémité du filtre. Le matériau de bouchage est une colle organique et il n'est pas calciné.

On imprègne la porosité de monolithe, par l'une de ces extrémités, d'une suspension comprenant 15 % en masse d'une poudre de zéolithe de type Ferriérite échangée avec 1,05% poids de Fer. 85 % en masse d'eau déminéralisée, ayant été préalablement broyée en broyeur à billes pendant 3 heures. On revide l'excédent de suspension, par l'autre extrémité, par l'action conjuguée de la gravité et du vide, puis on sèche à 70°C pendant 12h.

Les étapes d'imprégnation suivie du séchage sont répétées jusqu'à obtention d'un chargement en zéolithe de 100 g/L, et le monolithe imprégné est calciné à 600°C pendant 1 heure. Lors de cette calcination la colle organique utilisée pour le bouchage temporaire est oxydée ce qui a pour effet d'éliminer les bouchons temporaires.

On réalise ensuite un second bouchage temporaire d'une partie des canaux pour chaque extrémité du monolithe de façon à ce que les canaux d'évacuation du filtre (i.e. les canaux se situant en aval des parois de filtration, par opposition aux canaux d'alimentation) soient bouchés aux deux extrémités sur une hauteur d'environ 2 à 3 mm. Le matériau de bouchage est une colle organique.

Un wash-coat comprenant 26 % en masse de particules de SiC ayant une distribution granulométrique centrée sur 15 µm, 4% en masse d'une poudre de verre (fritte) ayant un point de ramollissement de 375°C, 69 % en masse d'eau déminéralisée, et 1 % en masse de plastifiant cellulosique, est appliqué aux parois des canaux d'alimentation du filtre, séché à température ambiante pendant au moins 15 heures, séché à 100°C pendant 4 heures.

Un deuxième wash-coat comprenant 13 % en masse de particules de SiC ayant une distribution granulométrique centrée sur 15 µm, 2% en masse d'une poudre de verre (fritte) ayant un point de ramollissement de 375°C,85 % en masse d'eau déminéralisée, et 1% en masse de plastifiant cellulosique, est appliqué aux parois des canaux d'alimentation du filtre dans le sens inverse de la première enduction, séché à température ambiante pendant au moins 15 heures, séché à 100°C pendant 4 heures.

Un troisième wash-coat comprenant 8.5 % en masse de particules de SiC ayant une distribution granulométrique centrée sur 8 µm, 1.5% en masse d'une poudre de verre (fritte) ayant un point de ramollissement de 375°C, 89 % en masse d'eau déminéralisée, 1% en masse de plastifiant cellulosique, est appliqué aux parois des canaux d'alimentation du filtre dans le sens inverse de la deuxième enduction, séché à température ambiante pendant au moins 15 heures, séché à 100°C pendant 4 heures, puis calciné à 600°C pendant 1h. Lors de cette calcination la colle organique utilisée pour le second bouchage temporaire est oxydée ce qui a pour effet d'éliminer ces bouchons temporaires.

On réalise ensuite le bouchage des canaux à partir de grains de SiC présentant une granulométrie médiane inférieure de 50% de celle du matériau qui compose le monolithe pour 85% en masse et de poudre de verre (fritte) ayant un point de ramollissement de 375°C pour 15% en masse. Les bouchons ainsi formés sont ensuite frittés à une température de 600°C pendant 1h.

On décrit maintenant les résultats obtenus sur les différents exemples de l'art antérieur et de l'invention cités auparavant.

### Chargement en suie des FAP (A) et (C)

Pour la phase de chargement, une carotte de filtres à particules de diamètre 25 mm et de longueur 51 mm décrits dans les exemples 1 et 3 comprenant une face d'entrée des gaz et une face de sortie des gaz est installée en aval d'un brûleur de marque commerciale CAST. Le CAST est un brûleur dont on coupe la flamme afin de générer des particules de carbone. La flamme est générée à partir de la combustion du propane. La taille des particules peut être ajustée en faisant varier le mélange comburant/combustible, ce qui a pour effet de modifier la hauteur de la flamme. Celle-ci est coupée par un gaz inerte comme de l'azote à une hauteur variable. L'ensemble des expériences a été réalisé avec les réglages suivants :
- débit de propane = 2,7 litres/h,
- débit d'air pour la flamme = 70 litres/h,
- débit d'azote = 340 litres/h,
- débit d'air de dilution = 485 litres/min,

Une partie du flux généré par le CAST chargé en particules, soit environ 15 litres/min, est envoyé dans le filtre à particules associée à 5 litres/min de gaz additionnels composés d'un mélange de NO, CO, CO₂, C₃H₆ et C₃H₈. La quantité de suies générée par le bruleur est de 28 mg par heure. Le nombre total de particules de suies produites est de l'ordre de 7 10⁶ / cm3, leur distribution en taille est comprise entre 30 et 200nm, centrée à 90 nm. Les carottes de filtres à particules sont chargées pendant 20 minutes. La température du flux de particules en entrée de la carotte est de 80°C. La perte de charge aux bornes de la carotte est mesurée en permanence à l'aide d'un capteur de pression différentiel. Le nombre total de particules ainsi que leur distribution en taille sont également mesurés en amont et en aval de la carotte de FAP à l'aide d'un analyseur granulométrique SMPS+E (« Scanning Mobility Particulate Sizer + Electrometer ») de marque GRIMM.

### Test de filtration après chargement en suie

L'efficacité de filtration mesurée correspond au rapport entre le nombre total de particules émises au cours des 20 minutes de chargement en sortie de la carotte et le nombre total de particules produites par le CAST. L'efficacité de filtration est donnée en pourcentage. Les résultats sont :

| FAP | A l'état frais | | Après vieillissement hydrothermal (1000°C ; 25h ; 10% d'eau) | |
|---|---|---|---|---|
| | ΔP | Efficacité de filtration | ΔP | Efficacité de filtration |
| A (art antérieur) | 15 mbar | > 99 % | 6 mbar | 65% |
| C (invention) | 12 mbar | > 99 % | 12 mbar | > 99 % |

### Test de régénération des FAP (A) et (C)

Les carottes de FAP (A) et (C) sont chargées selon le protocole de chargement en suies décrit précédemment, pour une durée de 1 heure afin d'atteindre une charge en suie de 5 g par litre de FAP.

La régénération des carottes de FAP (A) et (C) est ensuite réalisée sous un flux d'air de 15 L/min. Le flux d'air est préchauffé à l'aide d'un four tubulaire placé en amont de la carotte de FAP. La température du flux d'air est augmentée de 80 à 700°C avec une rampe de 20°C/min. La perte de charge, le nombre et la distribution en taille des particules sont mesurés en permanence au cours de la montée en température. La valeur de la température pour laquelle la perte de charge commence à chuter est utilisée pour comparer les capacités de régénérations des différents systèmes. La carotte est ensuite refroidie sous air jusqu'à la température. Les mesures de perte de charge et d'efficacité de filtration sont ensuite réalisées selon le protocole décrit dans Résultat 1.

Les résultats en chargement après régénération sont :

| FAP décrit à l'exemple : | ΔP | Efficacité de filtration |
|---|---|---|
| A (art antérieur) | 8 mbar | 75% |
| C (invention) | 12 mbar | > 99 % |

### Test d'application de réduction des oxydes d'azote. Evaluation des performances du catalyseur (B) de l'art antérieur et du catalyseur (D) selon l'invention.

Les catalyseurs SCR sur FAP décrits aux exemples 2 et 4 sont évalués sur banc de gaz synthétique dans les conditions suivantes :
- Composition du mélange réactionnel :
   ∘ NOₓ: 200 ppm (60% NO, 40% NO₂)
   ∘ O₂: 8%
   ∘ H₂O : 10%
   ∘ NH₃/NOₓ = 1
   ∘ Complément à 100% par de l'azote
- Vitesse volumique horaire sur le FAP = 30 000H⁻¹
- Mesure des conversions des oxydes d'azote, NOx, en conditions stabilisées de température entre 180 et 450°C
- Les teneurs en NOx à l'entrée et à la sortie du réacteur sont mesurées par chimiluminescence (Analyseur ECOPHYSICS CLD822Mhkl )
- Les performances sont exprimées en % de conversion des oxydes d'azote par le calcul % Conversion = (NOx entrée - NOx sortie) / NOx entrée

Les performances en conversion des NOx du catalyseur (B) de l'art antérieur décrit à l'exemple 2 et du catalyseur de l'invention (D) décrits dans l'exemple 4 sont reportées dans le tableau ci-après :

| | | | | | | | |
|---|---|---|---|---|---|---|---|
| Conversion des NOx à T °C | 180 | 200 | 250 | 300 | 350 | 400 | 450 |
| Catalyseur (B) de l'art antérieur | 5 | 5 | 8 | 8 | 11 | 8 | 6 |
| Catalyseur (D) de l'invention | 70 | 80 | 91 | 97 | 98 | 95 | 93 |

Les résultats reportés tableau ci-dessus montrent que les performances du catalyseur (D) de l'invention sont nettement supérieures à celles du catalyseur de l'art antérieur (B).

## Revendications

1. Procédé de réalisation d'un filtre à particules à membrane comportant les étapes de sélection d'un monolithe en nid d'abeille avec un réseau de canaux séparés par des parois de canaux poreuses et le dépôt sur ces parois d'une membrane adhérant à la paroi, obtenue par une opération dite d'enduction pendant laquelle une partie des parois du monolithe sont placées au contact d'une suspension aqueuse d'une poudre frittable d'un matériau constitutif du monolithe puis en séchant et enfin en calcinant le monolithe revêtu à une température inférieure à 800°C, **caractérisé en ce que** la suspension aqueuse comporte également de la poudre de verre et un plastifiant, la membrane étant obtenue en répétant l'opération d'enduction, la concentration massique de poudre frittable et de poudre de verre dans la suspension aqueuse étant réduite à chaque nouvelle opération, la concentration massique en poudre frittable étant comprise entre 20 et 30%, la concentration massique de poudre de verre entre 3 et 5%, la concentration en plastifiant de l'ordre de 1% en masse, l'eau complétant à 100%, pour la première opération d'enduction.

2. Procédé selon la revendication 1, **caractérisé en ce que** le filtre comprend des canaux d'entrée et des canaux de sortie, et **en ce que** les parois du monolithe qui sont placées au contact de la suspension aqueuse d'une poudre frittable d'un matériau constitutif du monolithe sont les parois des canaux d'entrée.

3. Procédé selon l'une des revendications précédentes, **caractérisé en ce que** le monolithe et la poudre frittable sont constitués par un matériau choisi parmi le Carbure de Silicium, le Si-SiC, le Nitrure de Silicium, le Titanate d'Aluminium, la Mullite ou la Cordiérite, ou un mélange d'au moins deux de ces matériaux.

4. Procédé selon la revendication précédente, **caractérisé en ce que** le monolithe et la poudre frittable sont soit tous les deux en cordiérite soit tous les deux en carbure de silicium.

5. Procédé selon l'une quelconque des revendications précédentes, **caractérisé en ce que** la poudre frittable a une distribution granulométrique telle que 50 % des grains présente un diamètre au moins supérieur au diamètre de pore médian des parois du monolithe.

6. Procédé selon l'une quelconque des revendications précédentes, **caractérisé en ce qu'**avant de réaliser l'opération d'enduction, on bouche temporairement les deux extrémités des canaux ne devant pas recevoir de membrane.

7. Procédé selon l'une quelconque des revendications précédentes, **caractérisé en ce qu'**après la calcination, on bouche de façon permanente, alternativement les extrémités d'entrée ou de sortie des canaux du monolithe.

8. Procédé selon l'une quelconque des revendications précédentes, **caractérisé en ce qu'**on procède de plus au dépôt d'un ou plusieurs catalyseur(s), notamment par enduction ou imprégnation, sur le monolithe, avant ou après avoir réalisé la membrane.

9. Procédé selon la revendication précédente, **caractérisé en ce que** le ou toute combinaison de catalyseur(s) est choisi(e) notamment parmi au moins l'un des catalyseurs suivants : catalyseur de réduction des NOx, catalyseur d'oxydation, piège à NOx, catalyseur trois voies ou quatre voies, catalyseur de traitement des rejets d'ammoniac.

10. Procédé selon la revendication précédente, **caractérisé en ce que** le catalyseur est un catalyseur de réduction des NOx et ce qu'on effectue le dépôt dudit catalyseur en imprégnant les parois du monolithe d'une suspension aqueuse, notamment à base d'une poudre de zéolithe, par exemple de type ferriérite échangée avec du fer ou du cuivre, avant de procéder aux opérations d'enduction de la membrane.

11. Procédé selon la revendication 9, **caractérisé en ce que** le catalyseur est un catalyseur d'oxydation et ce qu'on effectue le dépôt dudit catalyseur, notamment à base de pseudoboehmite, de nitrate de platine à 25% et d'acide nitrique, après avoir procédé aux opérations d'enduction de la membrane.

12. Filtre à particules obtenu selon le procédé conforme à l'une des revendications précédentes.

13. Filtre à particules selon la revendication précédente, **caractérisé en ce qu'**il est muni d'au moins un revêtement catalytique sous ou sur la membrane.

## Patentansprüche

1. Verfahren zur Herstellung eines Membranpartikelfilters, umfassend die Schritte des Auswählens eines wabenförmigen Monolithen mit einem Netzwerk von Kanälen, die durch poröse Kanalwände getrennt sind, und des Abscheidens einer an der Wand haftenden Membran auf diesen Wänden, erhalten durch einen sogenannten Beschichtungsvorgang, während dessen Teil der Wände des Monolithen mit einer wässrigen Suspension eines sinterbaren Pulvers eines den Monolithen bildenden Materials in Kontakt gebracht werden, dann durch Trocknen und schließlich durch Calcinieren des Monolithen bei einer Temperatur unter 800°C beschichtet werden, **dadurch gekennzeichnet, dass** die wässrige Suspension auch Glaspulver und einen Weichmacher umfasst, wobei die Membran durch Wiederholen des Beschichtungsvorgangs erhalten wird, wobei die Massenkonzentration an sinterfähigem Pulver und Glaspulver in der wässrigen Suspension mit jedem neuen Vorgang verringert wird, wobei die Massenkonzentration an sinterfähigem Pulver zwischen 20 und 30 % liegt, die Massenkonzentration von Glasmehl zwischen 3 und 5 %, die Weichmacherkonzentration in der Größenordnung von 1 Masse-%, wobei das Wasser 100 % ausmacht, für den ersten Beschichtungsvorgang.

2. Verfahren nach Anspruch 1, **dadurch gekennzeichnet, dass** der Filter Einlasskanäle und Auslasskanäle umfasst und dass die Wände des Monolithen, die mit der wässrigen Suspension eines sinterbaren Pulvers eines Materialbestandteils des Monolithen in Kontakt gebracht werden, die Wände des Monolithen sind die Einlasskanäle.

3. Verfahren nach einem der vorhergehenden Ansprüche, **dadurch gekennzeichnet, dass** der Monolith und das sinterfähige Pulver aus einem Material bestehen, das ausgewählt ist aus Siliziumcarbid, Si-SiC, Siliziumnitrid, Aluminiumtitanat, Mullit oder Cordierit oder einer Mischung aus mindestens zwei davon diese Materialien.

4. Verfahren nach dem vorhergehenden Anspruch, **dadurch gekennzeichnet, dass** der Monolith und das sinterbare Pulver entweder beide aus Cordierit oder beide aus Siliziumcarbid bestehen.

5. Verfahren nach einem der vorangehenden Ansprüche, **dadurch gekennzeichnet, dass** das sinterbare Pulver eine solche Teilchengrößenverteilung aufweist, dass 50 % der Körner einen Durchmesser haben, der mindestens größer ist als der mittlere Porendurchmesser der Wände des Monolithen.

6. Verfahren nach einem der vorangehenden Ansprüche, **dadurch gekennzeichnet, dass** vor der Durchführung des Beschichtungsvorgangs die beiden Enden der Kanäle, die keine Membran aufnehmen sollen, vorübergehend blockiert werden.

7. Verfahren nach einem der vorangehenden Ansprüche, **dadurch gekennzeichnet, daß** nach dem Kalzinieren die Einlaß oder Auslaßenden der Kanäle des Monolithen abwechselnd dauerhaft verschlossen werden.

8. Verfahren nach einem der vorangehenden Ansprüche, **dadurch gekennzeichnet, dass** vor oder nach der Herstellung der Membran auch ein oder mehrere Katalysator(en) auf dem Monolithen abgeschieden werden, insbesondere durch Beschichtung oder Imprägnierung.

9. Verfahren nach dem vorhergehenden Anspruch, **dadurch gekennzeichnet, dass** der oder jede Kombination von Katalysator(en) insbesondere ausgewählt ist aus mindestens einem der folgenden Katalysatoren: NOx-Reduktionskatalysator, Oxidationskatalysator, NOx-Falle, Dreiwege oder Vierwege-Katalysator , Ammoniak-Abfallbehandlungskatalysator.

10. Verfahren nach dem vorhergehenden Anspruch, **dadurch gekennzeichnet, dass** der Katalysator ein NOx-Reduktionskatalysator ist und dass der Katalysator durch Imprägnieren der Wände des Monolithen mit einer wässrigen Suspension abgeschieden wird, insbesondere auf der Basis eines Zeolithpulvers, beispielsweise des ausgetauschten Ferrierittyps mit Eisen oder Kupfer, bevor die Membranbeschichtung durchgeführt wird.

11. Verfahren nach Anspruch 9, **dadurch gekennzeichnet, dass** der Katalysator ein Oxidationskatalysator ist und dass der Katalysator abgeschieden wird, insbesondere auf Basis von Pseudoböhmit, 25 % Platinnitrat und Salpetersäure, nachdem Membranbeschichtungsvorgänge durchgeführt wurden.

12. Partikelfilter, erhalten nach dem Verfahren nach einem der vorhergehenden Ansprüche.

13. Partikelfilter nach dem vorhergehenden Anspruch, **dadurch gekennzeichnet, dass** er mit mindestens einer katalytischen Beschichtung unter oder auf der Membran versehen ist.

## Claims

1. Process for producing a membrane particulate filter comprising the steps of selecting a honeycomb monolith with a network of channels separated by porous channel walls and the deposition on these walls of a membrane adhering to the wall, obtained by a so-called coating operation during which part of the walls of the monolith are placed in contact with an aqueous suspension of a sinterable powder of a material constituting the monolith, then by drying and finally by calcining the monolith coated with a temperature below 800°C, **characterized in that** the aqueous suspension also comprises glass powder and a plasticizer, the membrane being obtained by repeating the coating operation, the mass concentration of sinterable powder and glass powder in the aqueous suspension being reduced with each new operation, the mass concentration of sinterable powder being between 20 and 30%, the mass concentration of glass powder between 3 and 5%, the concentration of plasticizer in the order of 1% by mass, the water making up 100%, for the first coating operation.

2. Process according to Claim 1, **characterized in that** the filter comprises inlet channels and outlet channels, and **in that** the walls of the monolith which are placed in contact with the aqueous suspension of a sinterable powder of a material constituent of the monolith are the walls of the inlet channels.

3. Process according to one of the preceding claims, **characterized in that** the monolith and the sinterable powder consist of a material chosen from among silicon carbide, Si-SiC, silicon nitride, aluminum titanate, mullite or Cordierite, or a mixture of at least two of these materials.

4. Process according to the preceding claim, **characterized in that** the monolith and the sinterable powder are either both of cordierite or both of silicon carbide.

5. Process according to any one of the preceding claims, **characterized in that** the sinterable powder has a particle size distribution such that 50% of the grains have a diameter at least greater than the median pore diameter of the walls of the monolith.

6. Process according to any one of the preceding claims, **characterized in that** before carrying out the coating operation, the two ends of the channels not to receive a membrane are temporarily blocked.

7. Process according to any one of the preceding claims, **characterized in that** after the calcination, the inlet or outlet ends of the channels of the monolith are permanently plugged alternately.

8. Process according to any one of the preceding claims, **characterized in that** one or more catalyst(s) are also deposited, in particular by coating or impregnation, on the monolith, before or after having produced the membrane.

9. Process according to the preceding claim, **characterized in that** the or any combination of catalyst(s) is chosen in particular from at least one of the following catalysts: NOx reduction catalyst, oxidation catalyst, NOx trap, three-way or four-way catalyst, ammonia waste treatment catalyst.

10. Process according to the preceding claim, **characterized in that** the catalyst is a NOx reduction catalyst and that said catalyst is deposited by impregnating the walls of the monolith with an aqueous suspension, in particular based on a zeolite powder, for example of the ferrierite type exchanged with iron or copper, before carrying out the membrane coating operations.

11. Process according to Claim 9, **characterized in that** the catalyst is an oxidation catalyst and that the said catalyst is deposited, in particular based on pseudoboehmite, 25% platinum nitrate and nitric acid, after having performed membrane coating operations.

12. Particle filter obtained according to the process according to one of the preceding claims.

13. Particle filter according to the preceding claim, **characterized in that** it is provided with at least one catalytic coating under or on the membrane.
